# EUROPÄISCHE PATENTSCHRIFT

(11) **EP 2 875 760 B1**
(45) Veröffentlichungstag und Bekanntmachung des Hinweises auf die Patenterteilung: **12.12.2018**
(21) Anmeldenummer: 14190801.2
(22) Anmeldetag: 29.10.2014
(51) Int. Cl.: A47J 31/44

(54) **Kapselmaschine mit Dampfdüse und Kapsel dafür**
Capsule machine with steam nozzle and capsule for same
Machine à capsules équipée d'une buse à vapeur et capsule correspondante

(30) Priorität: 26.11.2013 DE 102013224099
(43) Veröffentlichungstag der Anmeldung: 27.05.2015
(73) Patentinhaber: BSH Hausgeräte GmbH, 81739 München (DE)
(72) Erfinder: Daburger, Josef, 83313 Siegsdorf-Hammer (DE); Höglauer, Michael, 83246 Unterwössen (DE); Steffl, Michael, 83250 Marquartstein (DE)

(56) Entgegenhaltungen:
- EP-B1- 1 715 778
- DE-A1- 10 334 526
- DE-U1- 9 214 283
- DE-U1-202008 015 035

## Beschreibung

Die Erfindung betrifft eine Kapselmaschine als Heißgetränkezubereitungseinrichtung für Haushaltszwecke, mit einer Heizeinrichtung, einer benutzerseitig zu öffnenden Brühkammer, in die zur Getränkezubereitung Kapseln einsetzbar sind, mit einer Fluidleitung von der Heizeinrichtung zur Brühkammer, mit einem Fluideinlass in die Brühkammer am brühkammerseitigen Ende der Fluidleitung, mit einem Getränkeauslass stromab der Brühkammer, mit einer Kapselerkennung und mit einer Dampfdüse. Die Kapselerkennung kann beispielsweise einen Strichcode-Leser oder Barcode-Reader umfassen. Die Erfindung betrifft außerdem eine spezielle Dampfkapsel für eine derartige Kapselmaschine und ein System aus einer Kapselmaschine und einer Dampfkapsel.

Aus der DE 20 2008 015035 U1 ist eine Vorrichtung zur Herstellung eines Brühgetränks aus Kaffeepads bekannt, bei der ein Padhalter, als erster Teil einer Brühkammer, an einen Teil des Geräts, als zweiter Teil einer Brühkammer, gedrückt wird. Zusammen bilden der Padhalter und der Teil des Geräts die Brühkammer. Zur Herstellung von Milchschaum kann der untere Teil der Brühkammer entfernt und an seiner Stelle ein anderer Halter mit einer Milchschaumdüse eingesetzt werden. Durch einen Schalter, der sich vorderseitig im Griffbereich des Benutzers am Gerät befindet, kann die Heizung des Geräts mit einer zweiten Leistungsstufe betrieben werden, wenn der andere Halter eingesetzt ist.

Die DE 42 04 746 A1 beschreibt eine Kaffeemaschine, mit einem Frischwassertank, der über eine mit einem Rückschlagventil versehene Verbindungsleitung mit einem einen Durchlauferhitzer aufweisenden Heizblock verbunden ist, dessen Auslauf über ein Steigrohr in einem Brühkopf endet, wobei im Heizblock ein zweiter Durchlauferhitzer vorgesehen ist, dessen Auslauf mit einer Dampfdüse verbunden ist, in einer Verbindungsleitung zwischen dem Einlass des zweiten Durchlauferhitzers und dem Frischwassertank eine Pumpe vorgesehen ist, und zwischen dem Frischwassertank und der Pumpe bzw. dem Rückschlagventil in der Verbindungsleitung zu dem ersten Durchlauferhitzer ein Zwei-Wege-Hahn vorgesehen ist, mit dem das Frischwasser wahlweise dem ersten Durchlauferhitzer oder über die Pumpe den zweiten Durchlauferhitzer zuführbar ist.

Aufgabe der Erfindung ist es, den Aufbau einer Kapselmaschine mit Dampfdüse zu vereinfachen.

Erfindungsgemäß wird diese Aufgabe bei der eingangsgenannten Kapselmaschine durch einen Dampfauslass in der Brühkammer gelöst, der durch Einsetzen einer geeignet ausgestalteten Dampfkapsel in die Brühkammer mit dem Fluideinlass verbindbar ist, und durch Aktivierungsmittel zum Einschalten der Dampferzeugung der Heizeinrichtung, die mittels der Dampfkapsel schaltbar sind. Neben dem Getränkeauslass verfügt die erfindungsgemäße Brühkammer also über einen weiteren Auslass, nämlich den Dampfauslass. Das Fluid bzw. der Dampf aus der Heizeinrichtung wird folglich nicht wie das
Heißwasser in den Getränkeauslass geleitet, sondern in den separaten Dampfauslass. Von dort gelangt er in die Dampfdüse. Die "Umleitung" des Dampfs in den Dampfauslass statt den Getränkeauslass geschieht durch Einsetzen einer weiter unten näher beschriebenen Dampfkapsel. Sie betätigt außerdem Aktivierungsmittel der Kapselmaschine, die die Dampferzeugung veranlassen.

Die Brühkammer einer Kapselmaschine besteht in der Regel aus einem feststehenden Brühkammerunterteil mit dem Fluidauslass darin und dem Getränkeauslass und einem schwenkbaren Brühkammeroberteil. Grundsätzlich kann der Dampfauslass in so gut wie jede Richtung aus der Brühkammer herausführen, solange er sich ausreichend druckdicht abdichten lässt. Nach einer vorteilhaften Ausgestaltung der Erfindung kann der Dampfauslass im Brühkammeroberteil angeordnet sein. Dadurch kann das Brühkammerunterteil räumlich und funktional entlastet werden, sodass der dortige Raum für den Fluideinlass, dem Getränkeauslass und gegebenenfalls für weitere Einrichtungen wie einem Barcodeleser, nicht eingeschränkt werden muss. Das Brühkammeroberteil dagegen verfügt in der Regel über ein gewisses Platzangebot und erhält damit ebenfalls eine fluidführende Funktion. Damit kann die Kapselmaschine unverändert kompakt ausgebildet sein, obwohl sie mit der Dampfdüse zusätzliche Funktionen bietet.

Der Dampfauslass kann grundsätzlich an einer nahezu beliebigen Stelle innerhalb des Brühkammeroberteils bzw. an dessen kapselzugewandten Abschnitt angeordnet sein, weil das Brühkammeroberteil keine sonstige fluidführende Funktion übernimmt, die ihr Platzangebot einschränken würde. Nach einer weiteren vorteilhaften Ausgestaltung der Erfindung können sich der Fluideinlass und der Dampfauslass in der Brühkammer koaxial einander gegenüber liegen. Daraus ergibt sich eine umlenkungsfreie Durchleitung des Dampfs durch die Dampfkapsel, der nicht nur den Aufbau der Dampfkapsel vereinfacht, sondern mit der Verkürzung des Leitungswegs auch Abkühlungsmöglichkeiten des Dampfs reduziert.

Nach einer demgegenüber alternativen Ausgestaltungsform der Erfindung kann der Dampfauslass im Brühkammerunterteil angeordnet sein. Er ist damit nicht in einem schwenkbaren Bestandteil der Brühkammer bzw. der Kapselmaschine untergebracht, was seine fluidische Verbindung mit der Dampfdüse erleichtert. Denn sie muss nicht flexibel ausgebildet sein, unterliegt keinen Beanspruchungen durch das Verschwenken des Brühkammeroberteils bei jeder Getränkezubereitung und ist damit weniger anfällig. Mit einer Anordnung des Dampfauslasses in räumlicher Nähe zum Fluideinlass kann der Weg des Dampfs durch die Kapsel minimiert werden, womit der Dampf weniger abkühlt.

Als Aktivierungsmittel zum Einschalten der Dampferzeugung bieten sich grundsätzlich unterschiedliche Schaltmittel an der Kapselmaschine an. Dazu eignet sich beispielsweise ein mechanischer oder elektromechanischer Schalter, der nach dem Einsetzen der Dampfkapsel und dem Verschließen der Brühkammer durch die Dampfkapsel geschaltet wird. Vorteilhafterweise kann eine vorzugsweise berührungslos arbeitende Einrichtung zur Kapselerkennung vorgesehen sein. Beispielsweise kann RFID-Technologie die eingesetzte Dampfkapsel erkennen und nach Verschließen der Brühkammer die Dampferzeugung starten. Nach einer weiteren vorteilhaften Ausgestaltung der Erfindung kann die Kapselmaschine einen Strichcodeleser als Aktivierungsmittel umfassen, der einen entsprechenden Strichcode auf einer eingelegten Dampfkapsel erfasst und die Dampferzeugung daraufhin aktiviert. Damit wird die Kapselmaschine auf die Herstellung von Dampf geschaltet. Auf diese Weise kann ein aufwendiges Umschaltventil zwischen der Brühkammer und dem Dampfauslass entfallen. Genauso wenig ist ein noch aufwendigerer zweiter Heizkreis mit einer eigenen Heizung erforderlich. Die Erfindung dagegen ermöglicht einen kostengünstigen Aufbau der Kapselmaschine, der nicht nur die genannten Einrichtungen aus dem Stand der Technik erübrigt, sondern auch entsprechende benutzerseitig zu betätigende Bedieneinrichtungen dafür.

Sofern es auf eine korrekte Positionierung der Dampfkapsel hinsichtlich des Fluidauslasses und ggf. des Strichcodelesers ankommt, kann die Kapselmaschine über an sich bekannte Positioniermittel verfügen. Sie kann beispielsweise einen Kapselhalter aufweisen, der einen Umriss der Kapsel abbildet, der das Einsetzen der Dampfkapsel in nur genau einer Position erlaubt. Damit kann das korrekte Zusammenwirken der Brühkammer mit der Dampfkapsel sichergestellt werden.

Der eingangs genannten Aufgabe dient auch eine entsprechende Dampfkapsel für eine Kapselmaschine der oben beschriebenen Art, mit einem Dampfeingang, der mit dem Fluideinlass der Kapselmaschine fluchtet und mit einem Dampfausgang, der mit dem Dampfauslass der Brühkammer der Kapselmaschine fluchtet, wenn die Dampfkapsel in die Brühkammer eingesetzt ist. Neben der übrigen, gewöhnlichen Dimensionierung auf die Brühkammer hin verfügt die Dampfkapsel über entsprechende Schnittstellen zur Brühkammer im Bereich ihres Fluideinlasses einerseits und ihres Dampfauslasses andererseits. Sie sorgen für einen fluid- und druckdichten Anschluss der Dampfkapsel an die Brühkammer. In einem einfachsten Fall liegen ihr Dampfeingang und ihr Dampfausgang bezüglich der Haupterstreckungsrichtung der Dampfkapsel einander unmittelbar gegenüber, also auf einer Oberseite und einer Unterseite der Dampfkapsel, sodass sie den Dampf umlenkungsfrei durchleitet. Alternativ kann ihr Dampfausgang auch an nahezu jeder beliebigen Stelle ihrer weitgehend scheibenförmigen Unterseite oder ihrer Oberseite angeordnet sein. Die Dampfkapsel trägt wie die Getränkekapseln auch einen Strichcode, der abweichend von den bekannten Codes eine Kapselmaschine auf einen Dampferzeugung umschaltet. Allein, aber auch nur durch Einlegen der Dampfkapsel lässt sich erfindungsgemäß der Dampfbezug aktivieren. Damit vereinfacht sich nicht nur die Bedienung der Kapselmaschine, weil keine zusätzlichen Bedienelemente an der Front der Kapselmaschine angebracht sein müssen. Auch die Gefahr einer versehentlichen Fehlbedienung der Dampfdüse ist weitgehend ausgeschlossen, was die Bedienungssicherheit der Kapselmaschine fördert. Mangels Umschalteinrichtung kann die Kapselmaschine schließlich auch kostengünstiger und kompakter ausgebildet sein.

Auch das Schaltmittel der Dampfkapsel kann unterschiedliche Prinzipien nutzen. Analog zur oben beschriebenen Technologie der Aktivierungsmittel kann sie über eine Schaltfläche zur Aktivierung eines Schalters in der Brühkammer verfügen oder einen RFID-Chip tragen. Nach einer weiteren vorteilhaften Ausgestaltung der Erfindung kann die Dampfkapsel einen Strichcode als Aktivierungsmittel der Schaltmittel der Brühkammer aufweisen, den der Strichcode-Leser in der Brühkammer erfasst. Daraufhin schaltet die Kapselmaschine die Dampferzeugung ein. Der Strichcode bietet ein Schaltmittel, mit dem außerdem und zusätzlich zum bloßen Einschaltsignal bei Bedarf weitere Informationen übertragen werden können.

Nach einer weiteren vorteilhaften Ausgestaltung der Erfindung umfasst die Dampfkapsel eine axiale Erhebung auf ihrer Oberseite, die mit einem Niederhalter im Brühkammeroberteil während eines Zubereitungsvorgangs zusammen wirkt. Die axiale Erhebung stützt die Dampfkapsel gegenüber dem Niederhalter ab, sodass die Dampfkapsel bei geschlossener Brühkammer zuverlässig in eine Dichtung eingedrückt wird, beispielsweise in eine axiale Dichtung am Fluideinlass und Fluidauslass und/oder eine radial am Umfang der Kapsel umlaufende Dichtung der Brühkammer. Die Dampfkapsel wird damit in weitgehend der gleichen Art und Weise wie herkömmliche Getränkekapseln in der Brühkammer festgehalten. Die axiale Erhebung kann beispielsweise als Dom ausgebildet sein, der nur eine Teilfläche der Oberseite der Dampfkapsel einnimmt, oder als gewölbte, kuppelförmige Oberseite der Dampfkapsel selbst.

Die eingangs genannte Aufgabe wird schließlich auch durch System aus einer oben detailliert beschriebenen Kapselmaschine mit einer Dampfkapsel gelöst, die in der vorher beschriebenen Art und Weise ausgebildet ist. In diesem System erübrigt sich eine separate Betätigungseinrichtung an der Kapselmaschine, weil die Aktivierung der Dampfdüse eben nicht durch eine geräteseitige Benutzereingabe erfolgt, sondern lediglich durch Einlegen der Dampfkapsel. Die Einrichtung zur Kapselerkennung erfasst daraufhin den Code der Dampfkapsel, die die Zubereitungsmaschine auf die Zubereitung von Dampf umschaltet. Die sich aus diesem Vorgehen ergebenden Vorteile sind ebenfalls oben bereits beschrieben.

Das Prinzip der Erfindung wird im Folgenden anhand einer Zeichnung beispielshalber noch näher erläutert. In der Zeichnung zeigen:
- Figur 1:: Die Brühkammer einer erfindungsgemäßen Kapselmaschine ohne Kapselhalter,
- Figur 2:: Die Brühkammer mit Kapselhalter,
- Figur 3:: Das Brühkammerunterteil mit eine erfindungsgemäßen Dampfkapsel, und
- Figur 4:: Eine schematische Darstellung der Brühkammer samt Heizung und Dampfdüse.

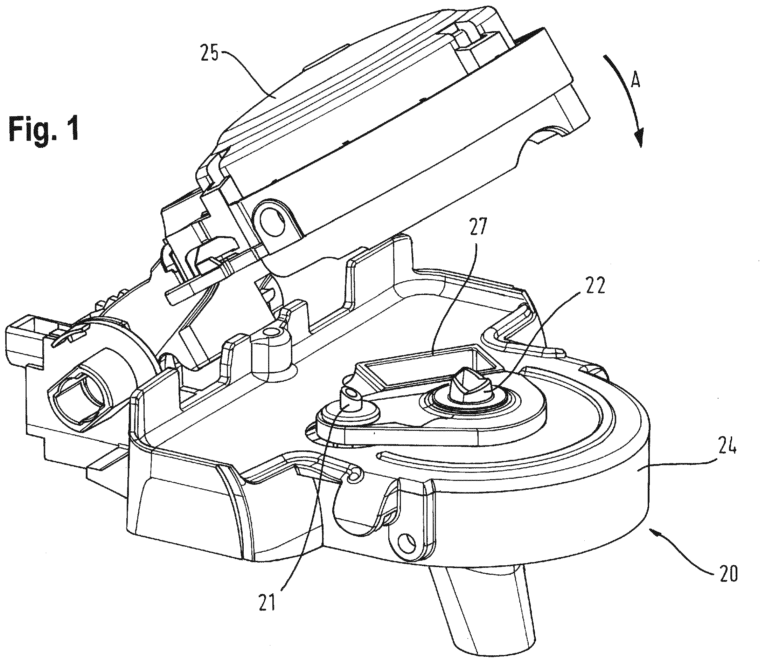

Figur 1 bietet eine perspektivische Ansicht auf eine erfindungsgemäße Brühkammer 20 einer im Übrigen nicht dargestellten Kapselmaschine, die sich bekanntermaßen aus einem feststehenden Brühkammerunterteil 24 und einem demgegenüber schwenkbar angeordneten Brühkammeroberteil 25 zusammensetzt. Das Brühkammeroberteil 25 lässt sich in Richtung des Pfeils A auf das Unterteil 24 absenken und bildet dann zusammen mit ihm im verschlossenen Zustand die Brühkammer 20.

Das Brühkammerunterteil 24 trägt einen vertikal von unten einmündenden Fluideinlass 21 und einen daneben angeordneten Piercer 22 größeren Durchmessers, der als Getränkeauslass aus der Brühkammer 20 fungiert. Daneben bzw. in der Ansicht der Figur 1 dahinter ist das Fenster eines Strichcode-Lesers 27 als Einrichtung zur Kapselerkennung zu erkennen. Er dient als Aktivierungsmittel der Kapselmaschine, indem er Steuerungsinformationen erfasst und an eine nicht dargestellte Steuerungseinrichtung der Kapselmaschine weiterleitet. Dadurch lassen sich bekannterweise Getränke unterschiedlicher Rezepturen zubereiten.

Abweichend von insoweit bekannten Brühkammern, dient der Fluideinlass 21 der Brühkammer 20 der Figur 1 nicht nur zur Einleitung von Zubereitungswasser, sondern erfindungsgemäß auch zur Einleitung von Dampf.

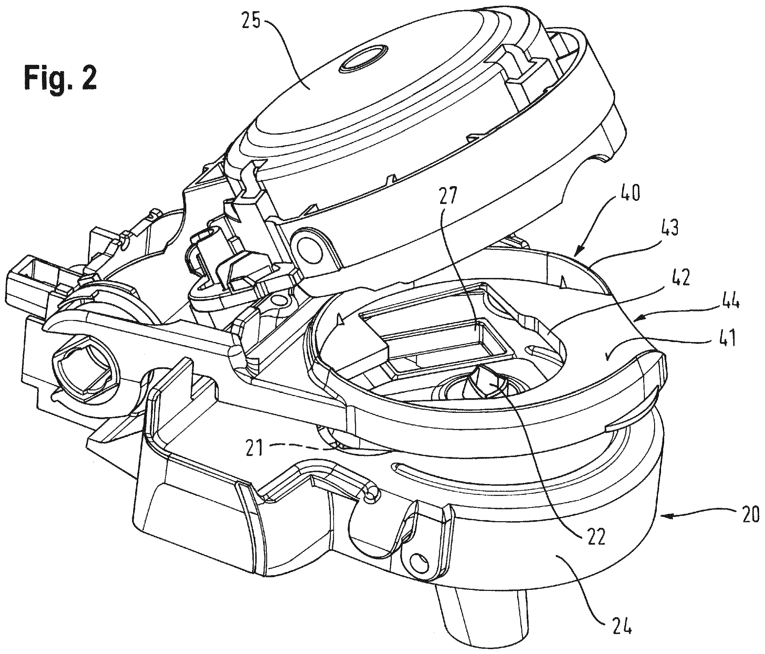

Figur 2 zeigt eine ähnliche perspektivische Ansicht, in der außerdem ein Kapselhalter 40 zu erkennen ist, der ebenfalls schwenkbar und zusätzlich entnehmbar zwischen der feststehenden Brühkammerunterteil 24 und dem Brühkammeroberteil 25 angeordnet ist. Er bietet mit seiner weitgehend kreisförmigen Auflagefläche 41 eine Auflage für eine Getränkekapsel, die durch einen umlaufenden Rahmen 43 in beiden horizontalen Raumrichtungen definiert gehalten wird. Der Rahmen 43 umzieht die weitgehend kreisförmige Auflagefläche 41, allerdings nicht vollständig, sondern er ist an einer Öffnung 44 unterbrochen. Die Auflagefläche 41 enthält außerdem einen Durchbruch 42, durch den der Fluideinlass 21 und der Piercer 22 bei geschlossener Brühkammer 20 hindurchragen. Außerdem ermöglicht es der Durchbruch 42 dem Strichcode-Leser 27, durch den Kapselhalter 40 hindurch zu wirken.

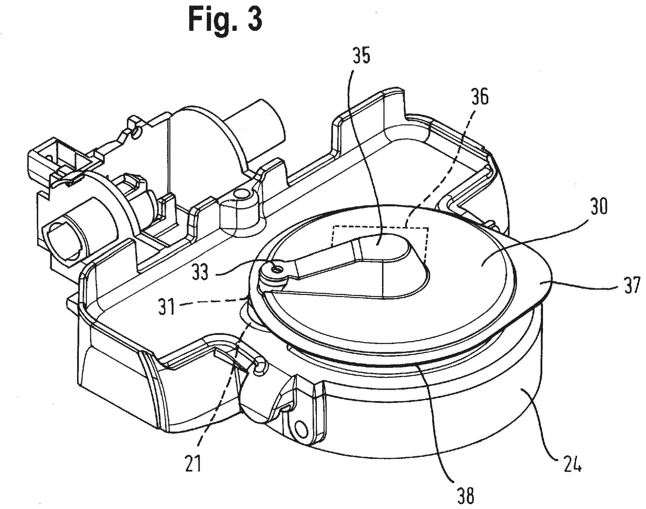

Figur 3 ist eine stark vereinfachte Darstellung, in der nur das Brühkammer-Unterteil 24 der Kapselmaschine dargestellt ist. Auf ihr liegt in einer bestimmungsgemäßen Position eine erfindungsgemäße Dampfkapsel 30. Sie hat, wie bekannte Getränkekapseln auch, eine im Wesentlichen scheibenförmige Kontur mit einer Grifflasche 37, die über ihren ansonsten kreisförmigen Umfang 38 hinausragt. Im Betrieb liegt die Grifflasche 37 in der Öffnung 44 des Kapselhalters 40, da ihr der Rahmen 43 keinen anderen Platz lässt. Damit ist die Lage der Dampfkapsel 30 im Kapselhalter 40 wie diejenige jeder anderen Getränkekapsel genau definiert.

Die Dampfkapsel 30 trägt auf ihrer Oberseite einen vom Umfang 38 zur Mitte hin aufsteigenden Dom 35. Er bedeckt bei eingelegter Dampfkapsel 30 den unter der Kapsel 30 liegenden Fluideinlass 21 und den Piercer 22. Nahe des Umfangs 38 enthält der Dom 35 unterseitig und daher nicht erkennbar einen Dampfeingang 31, der mit dem Fluideinlass 21 fluchtet. Auf seiner dem Dampfeingang 31 gegenüberliegenden Oberseite weist der Dom 35 einen Dampfausgang 33 auf, der mit dem Dampfeingang 31 fluchtet.

Die Dampfkapsel 30 trägt auf ihrer Unterseite, wie jede bekannte Getränkekapsel auch, einen Strichcode 36, der das Schaltmittel der Dampfkapsel 30 darstellt. Der Strichcode 36 ist bekanntermaßen derart angeordnet, dass er sich durch den Durchbruch 42 des Kapselhalters 40 (vgl. Figur 2) hindurch vom Strichcode-Leser 27 erfassen lässt.

Die Dampfkapsel 30 lässt sich in die Kapselmaschine in der gleichen Weise einsetzen und wird in der gleichen Weise positioniert, wie jede Getränkekapsel. Mit dem Verschließen der Brühkammer 20 dringen daher der Piercer 22 und der Fluideinlass 21 an ihrer Unterseite in die Dampfkapsel 30 ein, vergleichbar einem Perforieren einer Getränkekapsel. Abweichend gegenüber bekannten Getränkekapseln stellt der Dom 35 jedoch keine fluidische Verbindung zwischen dem Fluideinlass 21 und dem Piercer 22 als Getränkeauslass her. Der Piercer 22 ragt in die Dampfkapsel 30 bzw. in deren Dom 35 herein, erhält aber keine weitere Funktion. Erfindungsgemäß erzeugt die Dampfkapsel 30 vielmehr eine fluidische Verbindung zwischen dem Fluideinlass 21 und dem Dampfeingang 31 bzw. dem Dampfausgang 33. Die Dampfkapsel 30 leitet also den Dampf der Kapselmaschine lediglich in der Achse des Fluideinlasses 21 durch die Brühkammer 20 senkrecht aufwärts hindurch.

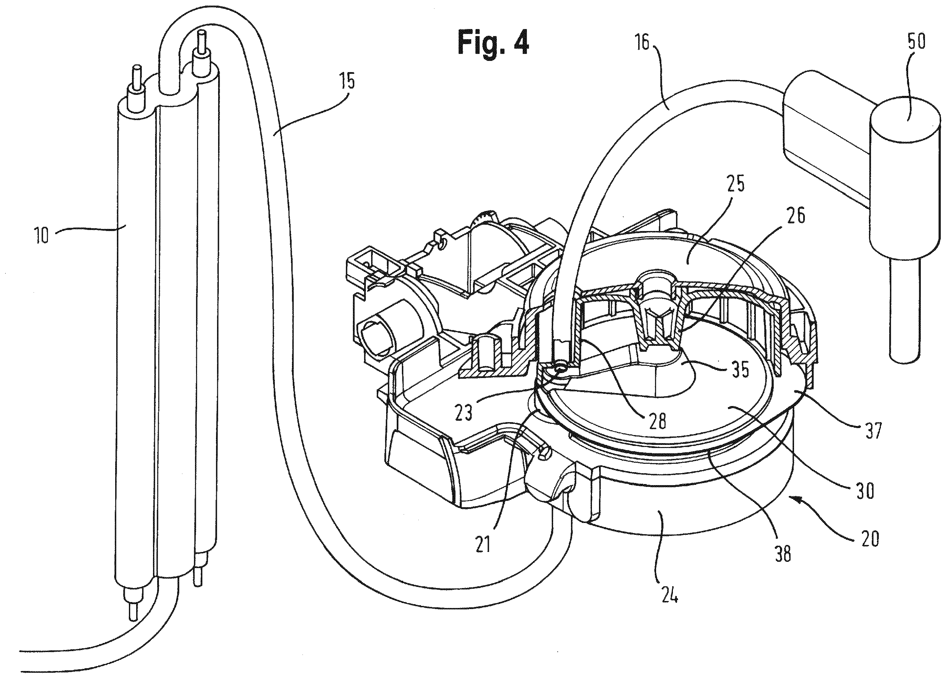

Figur 4 zeigt schematisch den Aufbau der wesentlichen Bestandteile der Kapselmaschine zur Dampferzeugung. Sie umfasst demnach einen Durchlauferhitzer 10, der als Heizung sowohl zur Erwärmung des Wassers auf Brühtemperatur, als auch zur Erzeugung von Dampf dient. Sowohl das Heißwasser, als auch der Dampf lassen sich über eine Fluidleitung 15 zum Fluideinlass 21 in die Brühkammer 20 leiten. Bei einer Getränkezubereitung wird das Zubereitungswasser vom Fluideinlass 21 durch eine nicht dargestellte Getränkekapsel hindurch zum Piercer 22 als Getränkeauslass und von dort in ein bereitgestelltes Getränkegefäß abgegeben.

Die erfindungsgemäße Brühkammer 20 weist in ihrem Brühkammeroberteil 25 zusätzlich einen Dampfauslass 23 auf, der dem Fluideinlass 21 axial gegenüber liegt. An ihn schließt sich eine weitere Fluidleitung 16 an, die eine fluidische Verbindung zu einer Dampfdüse 50 herstellt. Der Verlauf der Leitungen 15 und insbesondere 16 ist nur schematisch dargestellt und gibt nicht den tatsächlichen Verlauf insbesondere der Fluidleitung 16 wieder. Die Fluidleitung 16 verläuft vielmehr innerhalb des Brühkammeroberteils 25 und damit unsichtbar und gegenüber äußeren Einflüssen geschützt innerhalb der Kapselmaschine.

Das Brühkammeroberteil 25 umfasst in bekannter Weise außerdem einen zentralen und in die Brühkammer 20 abwärts ragenden Niederhalter 26, der mit dem Dom 35 der Dampfkapsel 30 und mit den Oberseiten der bekannten Getränkekapseln korrespondiert. Daneben und radial nach außen versetzt im Bereich des Umfangs 38 der Dampfkapsel 30 ragt ein zylinderförmiger Schacht 28 in das Innere der Brühkammer 20 hinein, an dessen unterem Ende der Dampfauslass 23 angeordnet ist.

Eine Aktivierung der Dampfdüse 50 beispielsweise zur Zubereitung von Milchschaum wird erfindungsgemäß dadurch ausgelöst, dass statt einer Getränkekapsel die Dampfkapsel 30 in die Brühkammer 20 eingelegt wird. Beim Verschließen der Brühkammer 20 erfasst der Strichcode-Leser 27 (vgl. Figuren 1 und 2) den Strichcode 36 (vgl. Figur 3) auf der Unterseite der Dampfkapsel 30. Daraufhin werden die Informationen des Strichcodes 36 an die Steuereinrichtung weitergeleitet, die den Durchlauferhitzer zur Erzeugung von Dampf ansteuert.

Währenddessen ist die Brühkammer 20 vollkommen verschlossen, indem das Brühkammeroberteil 25 auf das Brühkammerunterteil 24 abgesenkt und verriegelt ist. Dabei wird die Dampfkapsel 30 vom Niederhalter 26 und vom Schacht 28 nicht nur in nicht dargestellte Dichtungen gedrückt, sondern der Piercer 22 und der Fluideinlass 21 dringen in eine Unterseite in die Dampfkapsel 30 ein. Der Niederhalter 26 und der Schacht 28 unterstützen das Eindringen in die Dampfkapsel 30, indem sie beim Absenken des Brühkammeroberteils 25 dem Piercer 22 und dem Fluideinlass 21 entgegengeschwenkt werden und die Dampfkapsel 30 zwischen sich einklemmen. Der Niederhalter 26 stützt sich auf der Oberseite des mittleren Teils des Doms 35 ab, der Schacht 28 senkt sich auf den Dampfausgang 33 der Dampfkapsel 30 und findet so auf der planen Auflagefläche um den Dampfausgang 33 herum einen dampfdichten Anschluss an den Fluideinlass 21.

Sobald eine ausreichende Dampfmenge zur Verfügung steht, verlässt Dampf den Durchlauferhitzer 10 und strömt in die Leitung 15. Von dort gelangt er in den Fluideinlass 21 in den Dampfeingang 31 und damit in die Dampfkapsel 30. Jene verlässt er durch den Dampfausgang 33 und strömt in dem Dampfauslass 23 im Brühkammeroberteil 25 und von dort durch die Fluidleitung 16 in die Dampfdüse 50. Die Aktivierung der 50 bzw. die Zubereitung von Dampf oder Milchschaum wird folglich ausschließlich durch das Einlegen einer Dampfkapsel 30 hervorgerufen. Eine Betätigung der Kapselmaschine an einer benutzerseitigen Eingabeschnittstelle ist folglich nicht erforderlich. Nach Abschluss der Dampfzubereitung lässt sich die Brühkammer 20 wieder öffnen, die Dampfkapsel 30 entnehmen und eine Getränkekapsel für die Zubereitung eines weiteren Getränks wieder einsetzen.

Für die erneute Zubereitung von Dampf ist keine neue Dampfkapsel 30 erforderlich, sondern dieselbe Dampfkapsel 30 eines vorangegangenen Vorgangs lässt sich weitgehend beliebig oft für nachfolgende Getränkezubereitungsvorgänge unter Dampfbeteiligung verwenden.

Da es sich bei den vorhergehenden, detailliert beschriebenen Kapselmaschine um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Dampfkapsel und der Verlauf der Dampfleitungen in anderer Form als in der hier beschriebenen erfolgen. Ebenso kann die Anordnung des Dampfauslasses in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 10: Heizung
- 15: Fluidleitung
- 16: Fluidleitung
- 20: Brühkammer
- 21: Fluideinlass
- 22: Piercer
- 23: Dampfauslass
- 24: Brühkammerunterteil
- 25: Brühkammeroberteil
- 26: Niederhalter
- 27: Strichcode-Leser
- 28: Schacht
- 30: Dampfkapsel
- 31: Dampfeingang
- 33: Dampfausgang
- 35: Dom
- 36: Strichcode
- 37: Grifflasche
- 38: Umfang
- 40: Kapselhalter
- 41: Auflagefläche
- 42: Durchbruch
- 43: Rahmen
- 44: Öffnung
- 50: Dampfdüse

## Patentansprüche

1. Kapselmaschine als Heißgetränkezubereitungseinrichtung für Haushaltszwecke, mit einer Heizeinrichtung (10), einer benutzerseitig zu öffnenden Brühkammer (20), in die zur Getränkezubereitung Kapseln einsetzbar sind, mit einer Fluidleitung (15) von der Heizeinrichtung (10) zur Brühkammer (20), mit einem Fluideinlass (21) in die Brühkammer (20) am brühkammerseitigen Ende der Fluidleitung (15), mit einem Getränkeauslass (22) stromab der Brühkammer (20) und mit einer Dampfdüse (50) stromab der Brühkammer (20), **gekennzeichnet durch** einen Dampfauslass (23) in der Brühkammer (20), der durch Einsetzen einer geeigneten Dampfkapsel (30) in die Brühkammer (20) mit dem Fluideinlass (21) verbindbar ist, und durch Aktivierungsmittel (27) zum Einschalten der Dampferzeugung der Heizeinrichtung (10), die mittels der Dampfkapsel (30) schaltbar sind.

2. Kapselmaschine nach Anspruch 1 mit einem feststehenden Brühkammerunterteil (24) und einem schwenkbaren Brühkammeroberteil (25), **dadurch gekennzeichnet, dass** der Dampfauslass (23) im Brühkammeroberteil (25) angeordnet ist.

3. Kapselmaschine nach Anspruch 2, **dadurch gekennzeichnet, dass** sich der Fluideinlass (21) und der Dampfauslass (23) in der Brühkammer (20) koaxial einander gegenüber liegen.

4. Kapselmaschine nach Anspruch 1 mit einem feststehenden Brühkammerunterteil (24) und einem schwenkbaren Brühkammeroberteil (25), **dadurch gekennzeichnet, dass** der Dampfauslass (23) im Brühkammerunterteil (24) angeordnet ist.

5. Kapselmaschine nach einem der obigen Ansprüche, **gekennzeichnet durch** eine Einrichtung zur Kapselerkennung (27) im Brühkammerunterteil (24) als Aktivierungsmittel.

6. Dampfkapsel (30) für eine Kapselmaschine nach einem der obigen Ansprüche, mit einem Dampfeingang (31), der mit dem Fluideinlass (21) fluchet, und mit einem Dampfausgang (33), der mit dem Dampfauslass (23) der Brühkammer (20) fluchet, und mit Schaltmitteln (36), die die Aktivierungsmittel (27) der Kapselmaschine betätigen, wenn die Dampfkapsel (30) in die Brühkammer (20) eingesetzt ist.

7. Dampfkapsel (30) nach dem obigen Anspruch, **gekennzeichnet durch** einen Strichcode (36) als Schaltmittel.

8. Dampfkapsel (30) nach Anspruch 6 oder 7, **gekennzeichnet durch** eine axiale Erhebung (34), die mit einem Niederhalter (26) im Brühkammeroberteil (25) zusammenwirkt.

9. System aus einer Kapselmaschine nach einem der Ansprüche 1 bis 5 und einer Dampfkapsel nach einem der Ansprüche 6 bis 8 zur Zubereitung von Heißgetränken.

## Claims

1. Capsule machine as a hot beverage preparation device for household use, with a heating device (10), a brewing chamber (20) to be opened on the user side, into which capsules for beverage preparation can be inserted, with a fluid line (15) from the heating device (10) to the brewing chamber (20), with a fluid inlet (21) into the brewing chamber (20) on the brewing chamber-side end of the fluid line (15), with a beverage outlet (22) downstream of the brewing chamber (20) and with a steam nozzle (50) downstream of the brewing chamber (20), **characterised by** a steam outlet (23) in the brewing chamber (20), which can be connected to the fluid inlet (21) by inserting a suitable steam capsule (30) into the brewing chamber (20), and by activation means (27) for switching on the steam generation of the heating device (10), which can be switched by means of the steam capsule (30).

2. Capsule machine according to claim 1 with a stationary brewing chamber lower part (24) and a pivotable brewing chamber upper part (25), **characterised in that** the steam outlet (23) is arranged in the brewing chamber upper part (25).

3. Capsule machine according to claim 2, **characterised in that** the fluid inlet (21) and the steam outlet (23) lie coaxially opposite one another in the brewing chamber (20).

4. Capsule machine according to claim 1 with a stationary brewing chamber lower part (24) and a pivotable brewing chamber upper part (25), **characterised in that** the steam outlet (23) is arranged in the brewing chamber lower part (24).

5. Capsule machine according to one of the above claims, **characterised by** a device for capsule detection (27) in the brewing chamber lower part (24) as activation means.

6. Steam capsule (30) for a capsule machine according to one of the above claims, with a steam input (31), which aligns with the fluid inlet (21), and with a steam output (33), which aligns with the steam outlet (23) of the brewing chamber (20), and with switching means (36), which actuate the activation means (27) of the capsule machine when the steam capsule (30) is inserted into the brewing chamber (20).

7. Steam capsule (30) according to the above claim, **characterised by** a barcode (36) as switching means.

8. Steam capsule (30) according to claim 6 or 7, **characterised by** an axial raised area (34) which interacts with a hold-down device (26) in the brewing chamber upper part (25).

9. System consisting of a capsule machine according to one of claims 1 to 5 and a steam capsule according to one of claims 6 to 8 for preparing a hot beverage.

## Revendications

1. Machine à capsules sous forme d'appareil de préparation de boissons chaudes destinées à une utilisation domestique, comportant un appareil de chauffage (10), une chambre d'infusion (20) à ouverture côté utilisateur et dans laquelle peuvent être insérées des capsules de préparation de boisson, comportant une conduite de fluide (15) allant de l'appareil de chauffage (10) à la chambre d'infusion (20), comportant une admission de fluide (21) au sein de la chambre d'infusion (20) au niveau de l'extrémité côté chambre d'infusion de la conduite de fluide (15), comportant une sortie de boisson (22) en aval de la chambre d'infusion (20) et comportant une buse à vapeur (50) en aval de la chambre d'infusion (20), **caractérisée par** un échappement de vapeur (23) au sein de la chambre d'infusion (20), ledit échappement pouvant être raccordé à l'admission de fluide (21) grâce à l'introduction d'une capsule vapeur (30) appropriée dans la chambre d'infusion (20), et par un moyen d'activation (27) destiné à mettre en marche la production de vapeur de l'appareil de chauffage (10) et qui peut être commuté au moyen de la capsule vapeur (30).

2. Machine à capsules selon la revendication 1, comportant une partie inférieure de chambre d'infusion (24) fixe et une partie supérieure de chambre d'infusion (25) pivotante, **caractérisée en ce que** l'échappement de vapeur (23) est agencé dans la partie supérieure de chambre d'infusion (25).

3. Machine à capsules selon la revendication 2, **caractérisée en ce que** l'admission de fluide (21) et l'échappement de vapeur (23) se font face l'un l'autre de manière coaxiale au sein de la chambre d'infusion (20).

4. Machine à capsules selon la revendication 1, comportant une partie inférieure de chambre d'infusion (24) fixe et une partie supérieure de chambre d'infusion (25) pivotante, **caractérisée en ce que** l'échappement de vapeur (23) est agencé dans la partie inférieure de chambre d'infusion (24).

5. Machine à capsules selon l'une quelconque des revendications précédentes, **caractérisée par** un appareil destiné à la reconnaissance de capsule (27) dans la partie supérieure de chambre d'infusion (24) et faisant office de moyen d'activation.

6. Capsule vapeur (30) pour une machine à capsules selon l'une quelconque des revendications précédentes, comportant une arrivée de vapeur (31) alignée avec l'admission de fluide (21), et avec une sortie de vapeur (33) qui est alignée avec l'échappement de vapeur (23) de la chambre d'infusion (20), et comportant des moyens de commutation (36) qui actionnent le moyen d'activation (27) de la machine à capsules lorsque la capsule vapeur (30) est introduite dans la chambre d'infusion (20).

7. Capsule vapeur (30) selon la revendication ci-dessus, **caractérisée en ce qu'**un code à barres (36) fait office de moyen de commutation.

8. Capsule vapeur (30) selon la revendication 6 ou 7, **caractérisée par** une saillie axiale (34) qui collabore avec un serre-flan (26) au sein de la partie supérieure de chambre d'infusion (25).

9. Système constitué d'une machine à capsules selon l'une quelconque des revendications 1 à 5 et d'une capsule vapeur selon l'une quelconque des revendications 6 à 8 en vue d'une préparation de boissons chaudes.
